# NEUE EUROPÄISCHE PATENTSCHRIFT

(11) **EP 2 477 907 B2**
(45) Veröffentlichungstag und Bekanntmachung des Hinweises auf die Entscheidung über den Einspruch: **26.01.2022**
(45) Hinweis auf die Patenterteilung: 10.05.2017
(21) Anmeldenummer: 10745565.1
(22) Anmeldetag: 17.08.2010
(51) Int. Cl.: B65D 75/14, B65D 77/02, B65D 81/05, B65D 85/10

(54) **PACKUNGEN INSBESONDERE FÜR ZIGARETTEN SOWIE VERFAHREN UND VORRICHTUNG ZUM HERSTELLEN DERSELBEN**
PACKAGES, IN PARTICULAR FOR CIGARETTES, AND METHOD AND DEVICE FOR PRODUCING THE SAME
EMBALLAGES, EN PARTICULIER DE CIGARETTES, ET PROCÉDÉ ET DISPOSITIF POUR LEUR FABRICATION

(30) Priorität: 18.09.2009 DE 102009041900
(43) Veröffentlichungstag der Anmeldung: 25.07.2012
(73) Patentinhaber: Focke & Co. (GmbH & Co. KG), 27283 Verden (DE)
(72) Erfinder: ROESLER, Burkard, 27337 Blender (DE); LOHMANN, Reinhard, 27383 Scheessel (DE); BLOME, Hermann, 27337 Blender-Einste (DE)
(74) Vertreter: Ellberg, Nils
(86) Internationale Anmeldenummer: PCT/EP2010/005050
(87) Internationale Veröffentlichungsnummer: WO 2011/032625

(56) Entgegenhaltungen:
- EP-A1- 1 459 983
- EP-A1- 1 686 060
- EP-A1- 2 008 935
- EP-A2- 0 197 368
- EP-B1- 1 854 724
- EP-B1- 1 899 225
- EP-B1- 2 024 232
- WO-A1-2005/082738
- WO-A1-2007/132330
- WO-A1-2009/000427
- WO-A1-2009/098297
- WO-A2-2009/003581
- DE-A1-102007 031 208
- DE-A1-102008 033 936
- US-A- 2 377 358
- US-A- 4 300 676
- US-A- 4 495 745
- US-A- 4 648 236
- US-A1- 2003 192 287
- US-A1- 2009 038 269
- US-B2- 6 606 840

## Beschreibung

Die Erfindung betrifft eine Packung für stückiges Verpackungsgut, insbesondere für Zigaretten, bestehend aus einer Außenpackung vorzugsweise in der Ausführung als Klappschachtel und einer Innenpackung als Dichtblock mit einer den Packungsinhalt, insbesondere eine Zigarettengruppe, umgebenden Innenzuschnitt aus vorzugsweise aroma- und feuchtigkeitsdichter, thermisch siegelbarer Folie, die im Bereich einer Innen-Stirnwand eine mehrfach benutzbare Öffnungshilfe und im Bereich von Innen-Seitenwänden sowie einer Innen-Bodenwand durch thermisches Siegeln miteinander verbundene Faltlappen aufweist, gemäß dem Oberbegriff des Anspruchs 1.

Weiterhin betrifft die Erfindung ein Verfahren zum Herstellen von Packungen für Zigaretten, insbesondere der eingangs genannten Art, gemäß dem Oberbegriff des Anspruchs 4, sowie eine entsprechende Vorrichtung gemäß dem Oberbegriff des Anspruchs 9.

Eine Zigarettenpackung der eingangs genannten Art ist aus der Praxis bekannt. Bei diesem Stand der Technik ist ein Zigarettenblock bzw. ein Dichtblock mit einer Zigarettengruppe in einer Klappschachtel als Außenpackung angeordnet. Der Zuschnitt der Innenumhüllung ist mit einer mehrfach benutzbaren Öffnungshilfe versehen. Diese besteht aus einer innerhalb des Zuschnitts der Innenumhüllung durch Stanzlinien definierten Verschlusslasche und einer äußeren, die Verschlusslasche überdeckenden und mit einem Kleber versehenen Betätigungslasche. Der Benutzer erfasst zum Öffnen und Schließen des Dichtblocks die Betätigungslasche. Der Zuschnitt des Dichtblocks ist so um die Zigarettengruppe herumgefaltet, dass einander überdeckende Faltlappen im Bereich von schmalen Seitenflächen und im Bereich eines Bodens entstehen. Die kuvertartig angeordneten Faltlappen sind durch thermisches Siegeln miteinander verbunden. Innerhalb des Dichtblocks ist ein Innenkragen aus Karton positioniert, der Seitenlappen im Bereich der Seitenflächen und einen Bodenlappen im Bereich der Bodenfläche aufweist, jeweils zum Schutz der Zigaretten gegen Wärme und Druck beim thermischen Siegeln der Faltlappen.

Die Erfindung befasst sich mit Verbesserungen dieser und ähnlicher (Zigaretten=)Packungen. Insbesondere geht es um Voraussetzungen für eine leistungsfähige Fertigung der Packungen.

Eine erfindungsgemäße Packung weist die Merkmale des Anspruchs 1 auf.

Der Erfindung liegt die Erkenntnis zugrunde, dass die thermische und mechanische Belastung der Zigaretten im Bereich der Bodenfläche wegen der offenen Endflächen der Zigaretten besonders groß ist. Erfindungsgemäß ist deshalb hier eine Faltung und Siegelung für die siegelbare Innenumhüllung gewählt, die keine thermischen und mechanischen Belastungen auf die Enden der Zigaretten überträgt. Erfindungsgemäß ist hier eine Flossennaht gebildet, bei der Wärme und Druck auf abstehende Faltlappen, also ohne Beeinträchtigung der Zigaretten, übertragen werden können. Im Bereich der Seitenflächen können einander überdeckende Faltlappen durch Siegeln gegen die Seitenschenkel des Innenkragens miteinander verbunden. Der Innenkragen ist als einfacher Zuschnitt ausgebildet, insbesondere mit C-förmigen Querschnitt, nämlich mit Stütz- bzw. Schutzlaschen lediglich im Bereich der schmalen Seitenwände, jedoch ohne jegliche Lasche im Bereich der Bodenwand.

Gemäß einer bevorzugten Ausgestaltung der Erfindung ist vorgesehen, dass der Innenkragen durch im Wesentlichen abfallfreies Abtrennen aus einer fortlaufenden Materialbahn hergestellt ist und eine Ausnehmung zur Entnahme des Packungsinhalts und einer der Ausnehmung entsprechenden Fortsatz im Bereich eines unteren Endes der Kragen-Vorderwand aufweist, der gegen die Kragen-Vorderwand gefaltet wird, sodass im Bereich der Innen-Bodenwand des Dichtblocks kein Innenkragen gebildet ist.

Ein erfindungsgemäßes Verfahren weist die Merkmale des Anspruchs 4 auf.

Gemäß einer bevorzugten Weiterbildung der Erfindung, bei der es sich auch um eine eigenständige Lösung der Aufgabe handeln kann, ist vorgesehen, dass die gebildete Flossennaht durch eine am Umfang des Faltrevolvers angeordnete Anlegeeinrichtung gegen die Innen-Bodenwand umgefaltet wird, insbesondere während einer Stillstandsphase des taktweise angetriebenen Faltrevolvers, vorzugsweise derart, dass die Flossennaht aus einer radial zur Innen-Bodenwand gerichteten Stellung gegen die Innen-Bodenwand gelegt wird. Diese Lösung hat insbesondere den Vorteil, dass die Herstellung der Flossennaht mit geringem technischen Aufwand in die Fertigung der Packungen integriert werden kann.

Gemäß einer weiteren bevorzugten Weiterbildung der Erfindung, bei der es sich auch um eine eigenständige Lösung der Aufgabe handeln kann, ist vorgesehen, dass nach dem Siegeln der Flossennaht im Bereich der Innen-Bodenwand und dem Umfalten der Flossennaht gegen die Innen-Bodenwand Endabschnitte der Flossennaht beidseitig des Packungsinhalts gegen die Innen-Seitenwände gefaltet werden und die Faltlappen des Innenzuschnitts im Bereich der Innen-Seitenwände unter Überdeckung der umgefalteten Endabschnitte der Flossennaht übereinander gelegt und miteinander versiegelt werden, wobei vorzugsweise zunächst Randbereiche der Innen-Seitenwände mit mehrfach überlappenden Faltlappen vorgesiegelt werden und danach die Innen-Seitenwände im Wesentlichen vollflächig endgesiegelt werden.

Es hat sich als vorteilhaft herausgestellt zunächst die Flossennaht herzustellen und erst danach die Faltlappen im Bereich der Innen-Seitenwände. Insbesondere kann hier eine Couvert-Faltung der Faltlappen zum Einsatz kommen. Die gegen die Innen-Seitenwände umgefalteten Endbereiche der Flossennaht werden dabei durch die Faltlappen der Innen-Seitenwände gesichert.

Gemäß einer anderen bevorzugten Weiterbildung der Erfindung, bei der es sich auch um eine eigenständige Lösung der Aufgabe handeln kann, ist vorgesehen, dass dem Packungsinhalt vor der Zuführung des Innenzuschnitts ein Innenkragen zugeführt wird, der in einem Revolver C-förmig positioniert wird und in den dann der Packungsinhalt eingeschoben wird und dass der Packungsinhalt mit Innenkragen aus dem Revolver ausgefördert und durch den bereitgehaltenen Innenzuschnitt in den Faltrevolver eingefördert wird.

Diese Lösung hat insbesondere den Vorteil, dass die Zuführung der Innenkragen gut in die Fertigung der Packungen integriert werden kann.

Gemäß einer weiteren bevorzugten Weiterbildung der Erfindung, bei der es sich auch um eine eigenständige Lösung der Aufgabe handeln kann, ist vorgesehen, dass im Anschluss an das Siegeln der Faltlappen des Innenzuschnitts der Dichtblock entlang einer vorzugsweise horizontalen Förderstrecke gefördert wird zum fakultativen Auflegen eines Coupons und/oder eines Kragens und dass danach der Dichtblock in eine Tasche eines Faltrevolver mit einem Zuschnitt für die Außenpackung eingeschoben wird zur Falten der Packung.

Auf diese Weise kann die Packung auf einfache Weise komplettiert werden.

Eine erfindungsgemäße Vorrichtung zur Lösung der eingangs genannten Aufgabe weist die Merkmale des Anspruchs 9 auf.

Weitere bevorzugte Weiterbildungen der Erfindung, bei denen es sich auch um eine eigenständige Lösung der Aufgabe handeln kann, bestehen in der Konstruktion von Siegelstationen, in der Anordnung von Faltweichen für Faltlappen, in der Anordnung von Einrichtungen zum Auflegen von Druckträgern und/oder Kragen.

Ein bevorzugtes Ausführungsbeispiel der Erfindung wird nachfolgend anhand der Zeichnung beschrieben. In dieser zeigen:
- Fig. 1: eine (Zigaretten-)Packung des Typs Klappschachtel in räumlicher Darstellung,
- Fig. 2: ein Zuschnitt für einen Innenkragen in ausgebreiteter also ungefalteter Stellung,
- Fig. 3 bis Fig. 8: eine schematische Darstellung der Faltung eines Dichtblocks
- Fig. 9: eine Vorrichtung zur Herstellung der Packungen gemäß Fig. 1 in schematischer räumlicher Darstellung,
- Fig. 10: eine Seitenansicht der Vorrichtung gemäß Fig. 9,
- Fig. 11: eine Einzelheit der Vorrichtung gemäß Fig. 9 im Bereich der Zuführung des Innenkragens in vergrößerter teilweiser räumlicher Darstellung,

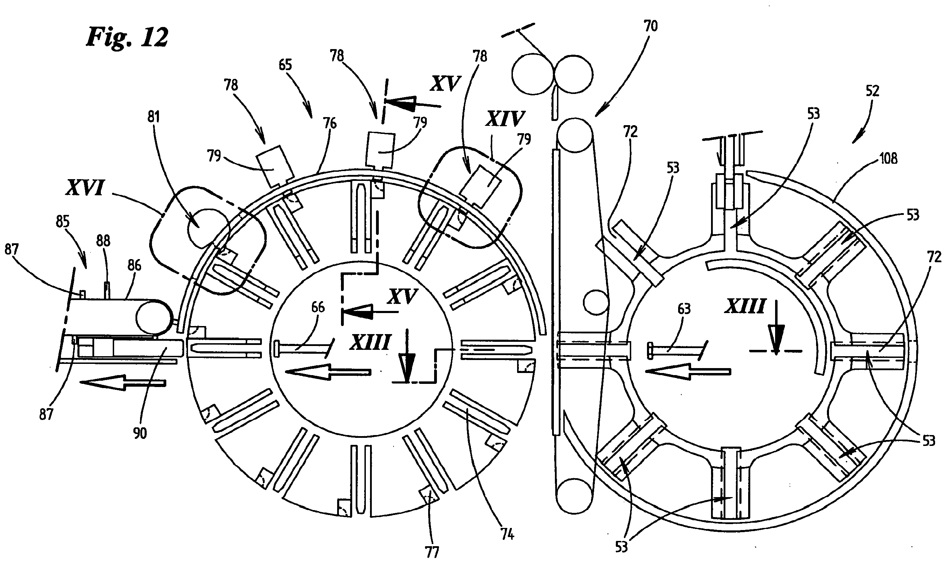

- Fig. 12: eine Einzelheit der Vorrichtung im Bereich XII in Fig. 9 in vergrößerter teilweiser Seitenansicht,
- Fig. 13: ein Schnitt durch die Vorrichtung entlang Schnittlinie XIII-XIII in Fig. 12,

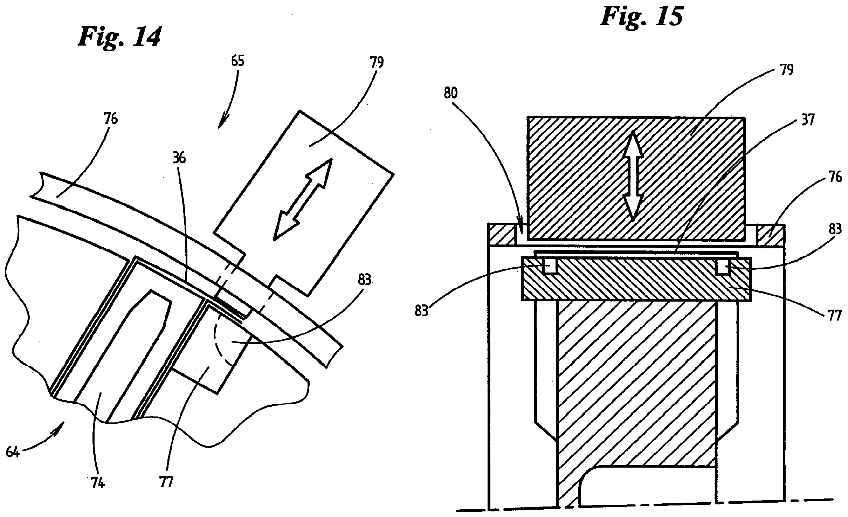

- Fig. 14: eine Einzelheit der Vorrichtung im Bereich XIV in Fig. 9 in vergrößerter teilweiser Seitenansicht,
- Fig. 15: ein Schnitt durch die Vorrichtung entlang Schnittlinie XV-XV in Fig. 12,
- Fig. 16: eine Einzelheit der Vorrichtung gemäß Bereich XVI in Fig. 12 in vergrößerter teilweiser Seitenansicht,
- Fig. 17: ein Schnitt entlang Schnittlinie XVI-XVI in Fig. 16, und

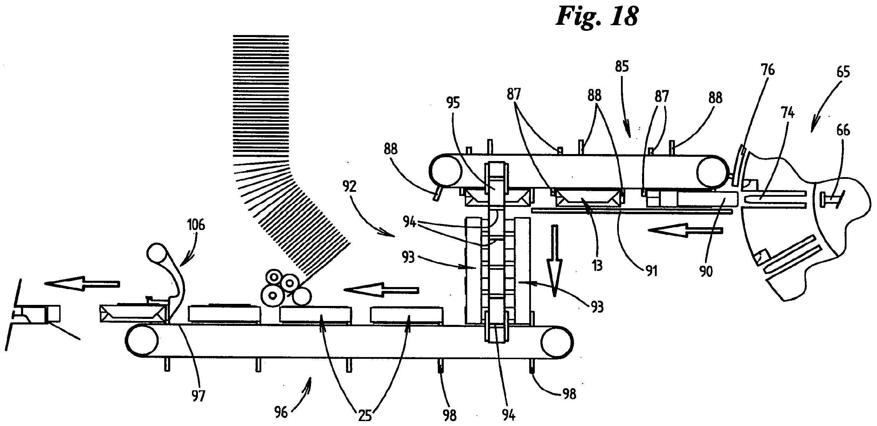

- Fig.18: eine Einzelheit der Vorrichtung gemäß Bereich XVIII in Fig. 10 in vergrößerter teilweiser Seitenansicht.

Die vorliegend dargestellte Packung 10 ist vorrangig für die Aufnahme von Zigaretten bestimmt, wobei eine Anzahl von Zigaretten in Formation zu einer Zigarettengruppe 11 als Packungsinhalt zusammengefasst ist. Im Aufbau besteht die (Zigaretten-)Packung 10 aus einer Außenpackung 12 und einer Innenpackung 13. Die Außenpackung 12 ist im vorliegenden Fall eine Klappschachtel mit standardmäßigem Aufbau, nämlich mit einem (unteren) Schachtelteil 14 und einem (oberen) Deckel 15 sowie gegebenenfalls einem Kragen 16. Die Außenpackung 12 kann auch in anderer Weise ausgebildet sein, insbesondere als shell-and-slide-Packung oder als Kappenschachtel.

Schachtelteil 14 und Deckel 15 bestehen aus einem einstückigen Zuschnitt (nicht gezeigt) mit Bereichen für eine Schachtel-Vorderwand 17, Bodenwand 18, Schachtel-Rückwand 19, Deckel-Rückwand 20, Stirnwand 21 und Deckel-Vorderwand 22. Schachtel-Seitenwände 23 und Deckel-Seitenwände 24 bestehen jeweils aus einander überdeckenden Seitenlappen, sind also doppellagig ausgebildet.

Innerhalb der so ausgebildeten Außenpackung 12 ist eine blockförmige Innenpackung angeordnet, und zwar in der Ausführung als Dichtblock 25. Der Packungsinhalt, insbesondere die Zigarettengruppe 11, ist allseitig von einem Innenzuschnitt 26 aus Folie umgeben, der aufgrund seiner Zusammensetzung vorzugsweise feuchtigkeits- und aromadicht ist. Darüber hinaus ist das Material des Innenzuschnitts 26 thermisch siegelbar, sodass Faltlappen durch Wärme und Druck miteinander verbunden werden können.

Eine Besonderheit des Dichtblocks 25 bzw. des Innenzuschnitts 26 ist eine mehrfach benutzbare, also wiederverschließbare Öffnungshilfe. Diese besteht aus einer Öffnungslasche 27, die eine Entnahmeöffnung freilegt. Die Öffnungslasche 27 ist vorliegend durch eine U-förmige Schwächungslinie 28, nämlich eine Perforation, eine durchgehende Stanzlinie oder andere geeignete Materialschwächung begrenzt. Beim Öffnen des Dichtblocks 25 wird die Öffnungslasche 27 mit Hilfe eines Betätigungsorgans, nämlich einer Betätigungslasche 29, in die Öffnungsstellung gebracht.

Die Betätigungslasche 29 ist Teil des Innenzuschnitts 26 bzw. Teil einer Außenlage des Innenzuschnitts 26. Die Betätigungslasche 29 ist von einer im Wesentlichen U-förmigen Schwächungs- oder Stanzlinie 30 begrenzt. Die Betätigungslasche 29 ist größer als die Öffnungslasche 27 und überdeckt diese mit einem vorzugsweise an drei Seiten gebildeten (U-förmigen) Verschlussstreifen 31. Dieser liegt an einem die Entnahmeöffnung umgebenden Randstreifen einer Innenlage als Träger der Öffnungslasche 27 an. Die Betätigungslasche 29 ist mindestens im Bereich des Verschlussstreifens 31 mit einem dauerhaft wirkenden Kleber versehen.

Der Zuschnitt für den Dichtblock 25, also der Innenzuschnitt 26, ist durch Faltlinien in Bereiche aufgeteilt für eine Innen-Vorderwand 32, eine Innen-Stirnwand 33 und eine Innen-Rückwand 34. Über die volle Länge des Innenzuschnitts 26 erstrecken sich beidseitig Seitenstreifen zur Bildung von miteinander verbundenen Innen-Seitenlappen 35. An freien Enden des langgestreckten Innenzuschnitts 26 sind Faltlappen gebildet, die sich über die volle Breite des Innenzuschnitts 26 erstrecken. Diese Faltlappen bilden eine Innen-Bodenwand 36 in besonderer Ausführung.

Zum Erfassen der Betätigungslasche 29 ist diese im Bereich der Innen-Vorderwand 32 mittig mit einer Griffzunge 45 versehen. Diese befindet sich in einem klebstofffreien Bereich. Die Griffzunge 45 ist so angebracht, dass sie stets oberhalb der Schachtel-Vorderwand 17 liegt, also frei erfasst werden kann. Weiterhin ist die Griffzunge 45 vorzugsweise gegen die Betätigungslasche 29 umgefaltet und dort mit einem Kleber fixiert. Auf diese Weise lässt sich die Betätigungslasche 29 leichter greifen.

Eine weitere Besonderheit ist die konstruktive Ausbildung des Dichtblocks 25 bzw. der Faltung des Innenzuschnitts 26. Der Innenzuschnitt 25 ist so gefaltet, dass unten, nämlich im Bereich einer Innen-Bodenwand 36, überstehende Faltlappen des Innenzuschnitts 26, in abstehender Position angeordnet sind unter Bildung einer Flossennaht 37. In diesem Bereich kann die thermische Siegelung der Faltlappen ohne Übertragung von Druck und/oder Wärme auf die Enden der Zigaretten übertragen werden. Die quer abstehende Flossennaht 46 wird danach gegen die Innen-Bodenwand 36 umgefaltet. Randseitig überstehende Endbereiche der Flossennaht 37 werden seitlich gegen die Innen-Seitenwände 35 des Dichtblocks 25 gefaltet.

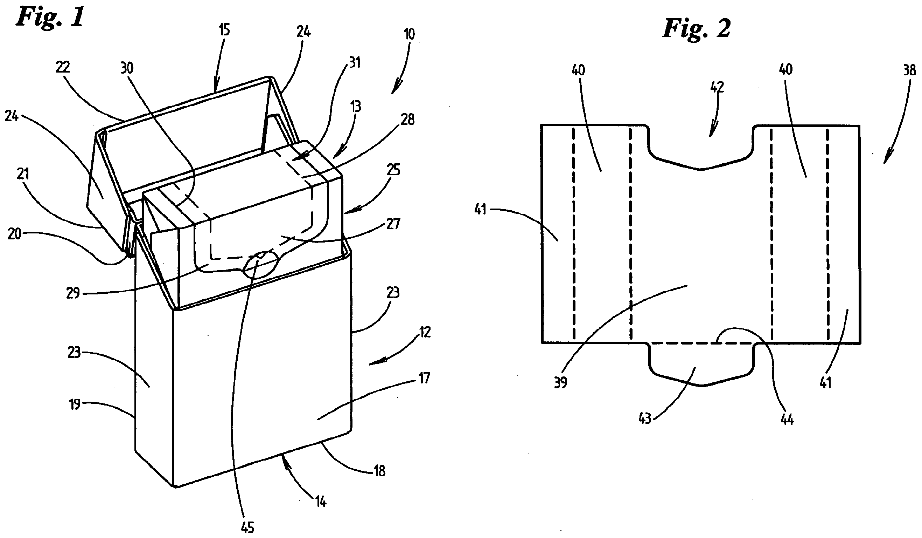

Zum Schutz des Packungsinhalts, nämlich der Zigaretten, beim Siegeln der Seitenlappen im Bereich der Innen-Seitenwände 35 ist innerhalb des Dichtblocks 25 eine Abdeckung angeordnet, die sich mindestens im Bereich der Innen-Seitenwände 35 der Innen-Vorderwand 32 und geringfügig im Bereich der Innen-Rückwand 34 erstreckt. Es handelt sich vorliegend um einen Innenkragen 38 (Fig. 2), der die Zigarettengruppe 11 teilweise umgibt. Der Innenkragen 38 erstreckt sich bei diesem Ausführungsbeispiel über die volle Länge bzw. Höhe der Zigarettengruppe 11 mit einer Kragen-Vorderwand 39 im frontseitigen Bereich. Kragen-Seitenwände 40 werden gegen seitliche Bereiche der Zigarettengruppe 11 umgefaltet und erstrecken sich im Bereich der Innen-Seitenwände 35, zur Abdeckung der Zigarettengruppe 11 gegen Wärme und Druck. Randstreifen 41 des Innenkragens 38 sind gegen die Rückseite der Zigarettengruppe 11 gefaltet, sodass diese von einem - im Querschnitt - C-förmigen Innenkragen 38 umgeben ist. Eine Ausnehmung 42 im Bereich der Kragen-Vorderwand 39 ermöglicht die Entnahme der Zigaretten bei geöffnetem Dichtblock 25.

Eine weitere Besonderheit ist ein am unteren Ende der Kragen-Vorderwand 39 gegenüberliegend der Ausnehmung 42 ausgebildeter Fortsatz 43, derart dass der Innenkragen 38 im wesentlichen abfallfrei aus einer fortlaufenden. Materialbahn 54 herausgetrennt werden kann. Der Fortsatz 43 wird um eine Faltlinie 44 gegen die Kragen-Vorderwand 39 gefaltet.

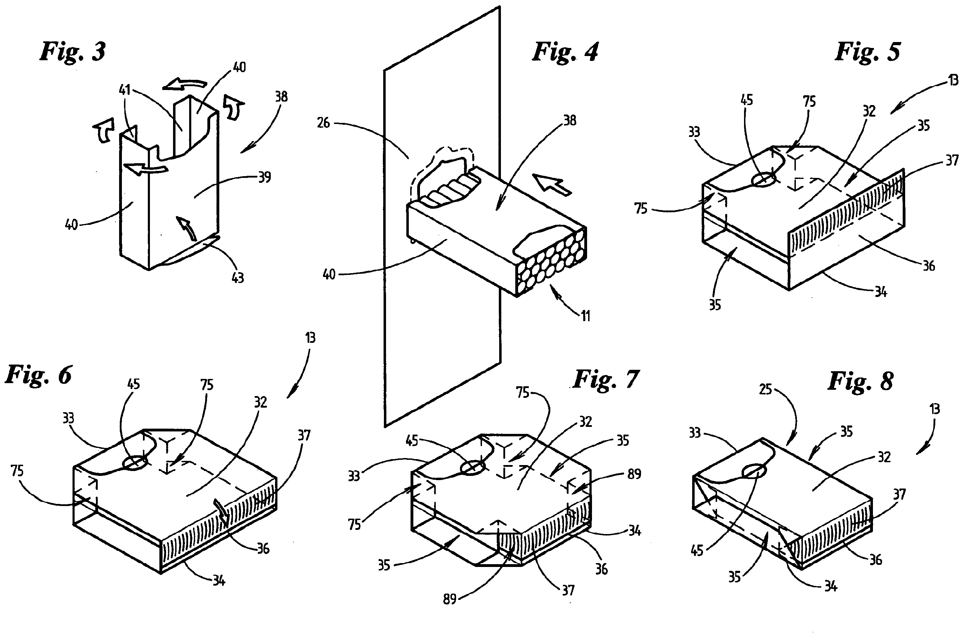

Eine Besonderheit ist das Herstellungsverfahren für den Dichtblock 25. Zunächst wird ein Zuschnitt für den Innenkragen 38 in C-Form gefaltet und der Fortsatz 43 gegen die Kragen-Vorderwand 39 gelegt (Fig. 3) und der formierten Zigarettengruppe 11 zugeführt. Danach werden vorbereitete Innenzuschnitte 26 bereitgehalten, nämlich in einer (vertikalen) Querebene zugeführt (Fig. 4). Die Zigarettengruppe 11 ist so positioniert, dass Filterenden in Transportrichtung nach vorn weisen. Diese erfassen den Innenzuschnitt 26. In Verbindung mit Führungen bzw. Faltorganen wird aufgrund des Transports der Innenzuschnitt 26 U-förmig um Zigarettengruppe 11 und Innenkragen 38 herumgefaltet.

Mit dem ersten U-Faltschritt werden auch frontseitige Ecklappen gefaltet (Fig. 5). Sodann wird die Faltung im Bereich der Innen-Bodenwand 36 ausgeführt, nämlich die Herstellung der Flossennaht 37 und deren Siegelung. Als nächstes wird die Flossennaht 37 gegen die Innen-Bodenwand 36 umgefaltet (Fig. 6) und danach randseitig jeweils in den Bereich der Innen-Seitenwand 35 gefaltet (Fig. 7). Danach erfolgt die Couvert-artige Faltung der Seitenlappen im Bereich der Innen-Seitenwände 35 und deren Siegelung (Fig. 8). Der so hergestellte Dichtblock 25 wird in geeigneter Weise in die Außenpackung 12 eingeführt.

Eine Besonderheit besteht darin, dass die Flossennaht 37 im Verlängerung der Innen-Bodenwand 36 ausgebildet wird. Entsprechend liegt eine gedachte Faltkante, um welche die Flossennaht 37 gefaltet wird im Übergang von der Innen-Vorderwand 32 zur Innen-Bodenwand 36. Denkbar ist natürlich auch, dass die Flossennaht 37 in analoger Weise in Verlängerung einer anderen Wand der Innenpackung 13 gebildet und um eine entsprechende andere Packungskante gefaltet wird.

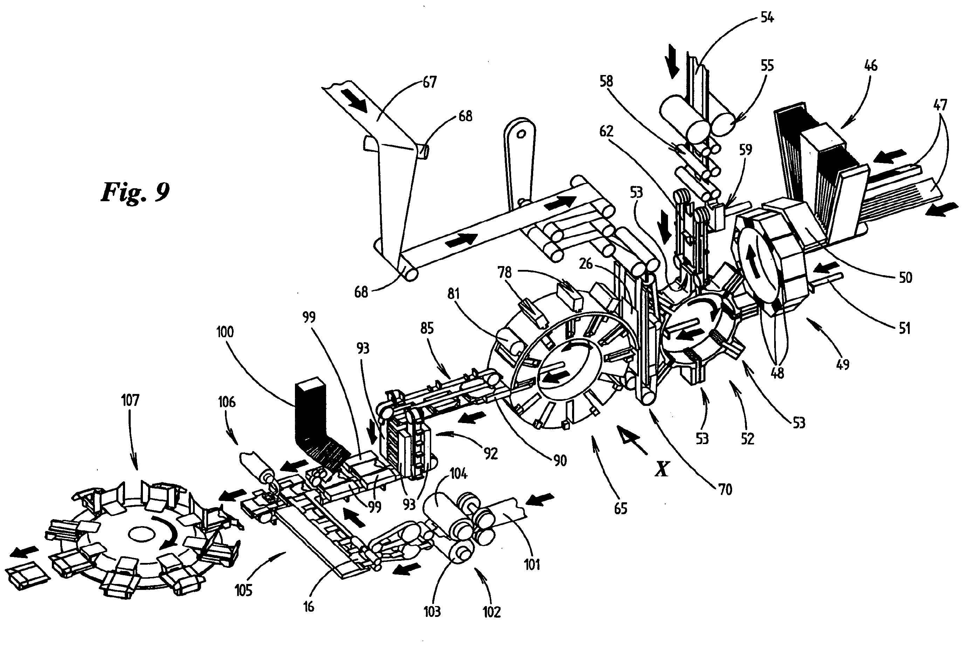

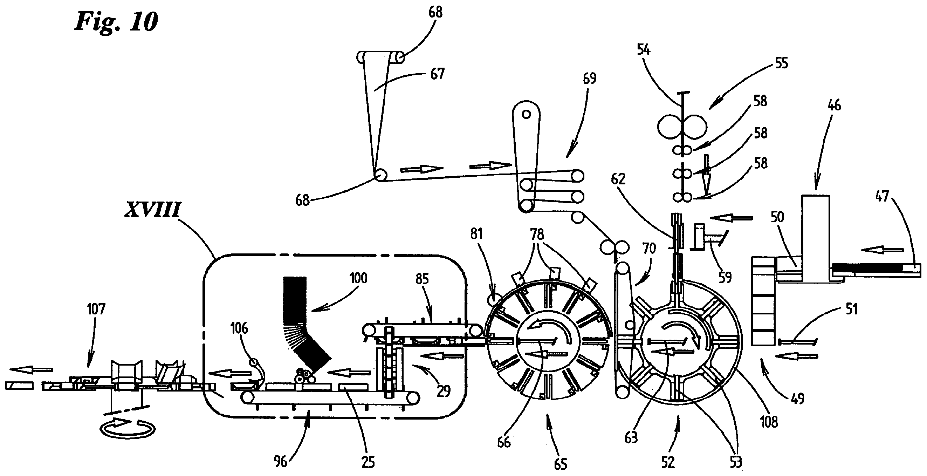

Nachfolgend wir eine bevorzugte Vorrichtung sowie ein Verfahren zur Herstellung der in Fig. 1 bis 8 gezeigten Packungen 10 erläutert. Fig. 9 und 10 zeigen eine entsprechende Vorrichtung in schematischer räumlicher Darstellung bzw. in Seitenansicht.

Die Zigaretten werden in aufrechten Schächten eines Zigarettenmagazins 46 bereitgehalten und in bekannter Weise durch Stößel-Pakete 47 aus dem Zigarettenmagazin 46 ausgeschoben. Jedes Stößel-Paket 47 erfasst dabei eine Zigarettengruppe 11 von nebeneinander und übereinander liegenden Zigaretten und schiebt diese aus dem Zigarettenmagazin 46 in Taschen 48 eines Revolvers 49. Zwischen Zigarettenmagazin 46 und Revolver 49 ist zudem eine Zigaretten-Weiche 50 angeordnet, die die Zigaretten-Formation bildet.

Durch Stößel-Pakete 47 werden bei jedem Takt des Revolvers 49 abwechselnd betrieben, so dass bei jeder kurzen Stillstandsphase des Revolvers 49 eine Tatsche 48 befüllt wird. Danach wird der Revolver 49 jeweils weiterbewegt, sodass die nächste Zigarettengruppe 11 durch das andere Stößel-Paket 47 eingeführt werden kann.

Der Revolver 49 ist quer zur Ausschubrichtung der Stößel-Pakete 47 angeordnet und dreht um eine horizontale Achse. Die Zigarettengruppen 11 werden enstprechend seitlich in Taschen 48 eingeschoben, die sich in einer oberen Stellung befinden. Ausgeschoben werden die Zigarettengruppen 11 in einer unteren Stellung, also etwa nach einer Drehung um 180°. Hierzu dient ein Schieber 51, der eine Zigarettengruppe 11 in horizontaler Richtung ausschiebt und in radial an einem anschließenden Revolver 52 angeordnete Taschen 53 einschiebt. In diesen Taschen 53 befinden sich zu diesem Zeitpunkt bereits die C-förmig gefalteten Innenkragen 38.

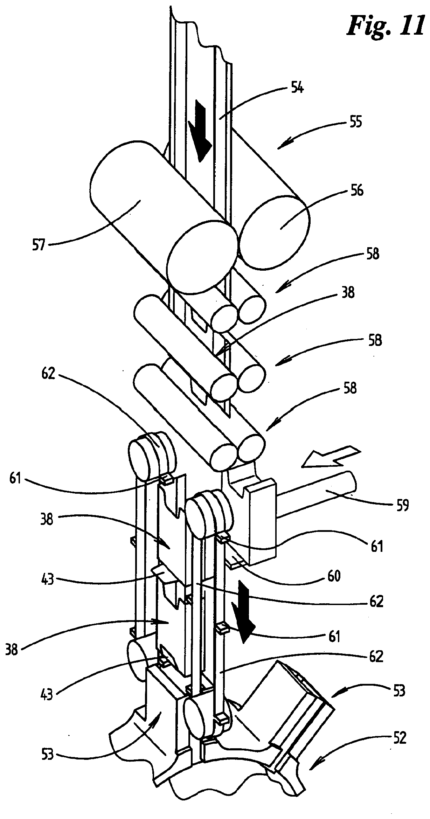

Die Innenkragen 38 werden dem Revolver 52 von oben zugeführt. Dies ist in Fig. 11 gezeigt. Die Innenkragen 38 werden in Form einer fortlaufenden Materialbahn 54 entlang einer aufrechten Förderstrecke transportiert und durch eine Schneideinrichtung 55 vereinzelt. Die Schneideinrichtung 55 besteht im vorliegenden Fall aus einer Messerwalze 56 und einer zugehörigen Gegenwalze 57, die die Materialbahn 54 in bekannter Weise zertrennen.

Danach werden die abgetrennten Innenkragen 38 durch aufeinanderfolgende Förderwalzenpaare 58 auf Abstand zueinander gebracht und mittels eines Stempels 59 in eine nicht gezeigte Tasche eingedrückt. Dabei wird der Innenkragen 38 in eine U-Form gefaltet, also mit noch nicht umgelegten Randstreifen 41. Am Stempel 59 ist unterseitig eine Faltnase 60 angeordnet, die bei diesem Schritt auch den Fortsatz 43 teilweise umlegt, nämlich quer zur Kragen-Vorderwand faltet.

Der teilweise gefaltete Innenkragen 38 wird dann im Bereich der Kragen-Seitenwände 40 durch Mitnehmer 61 aufweisende Fördertrume 62 erfasst und weiter in Richtung der Taschen 53 des taktweise betriebenen Revolvers 52 gefördert. Durch ein nicht gezeigtes feststehendes Hindernis kann während dieser Förderung der Fortsatz 53 gegen die Kragen-Vorderwand 93 gefaltet werden. Auch die Randstreifen 41 werden dabei durch nicht gezeigte Faltorgane, beispielsweise Faltweichen, gefaltet.

Nachdem die gefalteten Innenkragen 38 in die Tasche 53 des Revolvers 52 eingeführt sind wird der Revolver 52 taktweise um zwei Positionen weiterbewegt, sodass die Zigarettengruppen 11 in horizontaler Ebene in die Taschen 53 und den darin bereitgehaltenen Innenkragen 38 eingeschoben werden können. Nach weiterer Drehung des Revolvers 52 um 180° kann die Zigarettengruppe 11 mit darumgelegtem Innenkragen 38 in horizontaler Richtung ausgeschoben werden. Hierzu dient ein weiterer Schieber 63, der im Inneren des trommelartig ausgebildeten Revolvers 52 angeordnet ist.

Im Anschluss an die Einschubstation für die Innenkragen 38 weist der Revolver 52 eine Außenführung 108 auf, die sich am Umfang des Revolvers 52 erstreckt bis kurz vor die Ausschubstation.

Mit Hilfe des Schiebers 63 werden die Zigarettengruppen 11 mit darumgelegtem Innenkragen 38 in Taschen 64 eines anschließenden Faltrevolvers 65 eingeschoben. Auch der Faltrevolver 65 dreht um eine horizontale Achse und ist taktweise angetrieben wie der Revolver 52. Auch der Faltrevolver 65 ist trommelartig ausgebildet mit einem Schieber 66 zum Ausschub von Innenpackungen 13.

Faltrevolver 65 und Revolver 52 sind in einer gleichen Ebene angeordnet, sodass zur Übergabe der Zigarettengruppen 11 die jeweiligen Taschen 64 bzw. 53 fluchtend angeordnet sind. Faltrevolver 65 und Revolver 52 werden gegensinnig drehend angetrieben.

Während der Übergabe der Zigarettengruppen 11 mit darumgewickeltem Innenkragen 38 von dem Revolver 52 auf den Faltrevolver 65 wird der Innenzuschnitt 26 zugeführt und um die Zigarettengruppe 11 und den Innenkragen 38 herumgewickelt. Wie der Innenkragen 38 wird auch der Innenzuschnitt 26 von oben zugeführt, nämlich in Form einer fortlaufenden Materialbahn 67, die über mehrere Umlenkrollen 68 in den Bereich eines Pendelspeichers 69 geführt wird. Im Anschluss an den Bereich des Pendelspeichers 69 werden einzelne Innenzuschnitte 26 aus der Materialbahn herausgetrennt (nicht im Detail gezeigt). Die vereinzelten Innenzuschnitt 26 werden dann randseitig durch zwei im Abstand angeordnete Saugförderer 70 übergeben und im Förderweg der Zigarettengruppen 11 bereitgehalten. Die Saugförderer 70 sind in einem derartigen Abstand angeordnet, dass die Zigarettengruppen 11 zwischen den beiden Saugförderern 70 bzw. Fördertrumen 71 derselben hindurchbewegt werden können unter Mitnahme des Innenzuschnitts 26. Dabei wird der Innenzuschnitt 26 U-förmig um die Zigarettengruppe 11 mit Innenkragen 38 herumgelegt.

Die Innenkragen 38 werden mittels Unterdruck an den Fördertrumen 71 des Saugförderers 70 gehalten. Zum Zwecke der vollständigen Offenbarung wird auf die EP 0 031 515 B1 der Anmelderin verwiesen, die den Aufbau solcher Förderorgane zeigt.

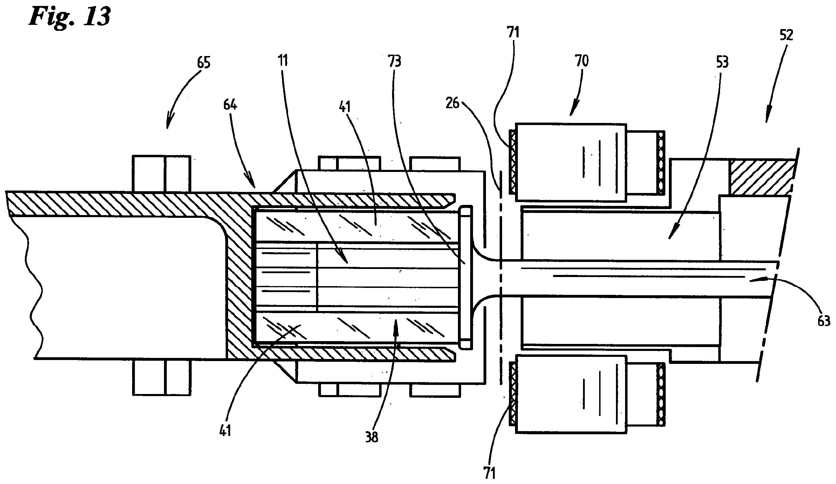

Eine weitere Besonderheit des Revolvers 52 besteht darin, dass die Taschen 53 seitlich offen sind bzw. entsprechende Schlitze 72 aufweisen. Auf diese Weise kann der Schieber 63 teilweise eine größere Breite aufweisen als die Taschen 53 und durch die Schlitze 72 seitlich herausragen. Dadurch ist es möglich, dass der Schieber 66 bzw. eine Schieberplatte 73 desselben über die Kontur der Zigarettengruppe 11 bzw. des darumgelegten Innenkragens 38 hinaussteht und diese sicher aus dem Revolver 52 ausschiebt (Fig. 13).

Der Faltrevolver 65 ist taktweise angetrieben und verfügt über eine Anzahl von radial gerichteten Taschen 64 zur Aufnahme eines teilweise in den Innenzuschnitt 26 eingehüllten Zigarettengruppe 11 mit Innenkragen 38. Seitlich an den Taschen 64 sind Faltfinger 74 angeordnet, die ebenfalls radial ausgerichtet sind und beidseitig der Innen-Stirnwand 33 über die Zigarettengruppe 11 hinausstehende Randbereiche 75 der Innen-Stirnwand 33 gegen die Kragen-Seitenwände 40 gegen legen während die Zigarettengruppe 11 mit dem Innenzuschnitt 26 in die Tasche 64 eingeschoben wird (Fig. 5).

Im Anschluss an die vorstehend beschriebene Einschubstation ist eine Außenführung 76 am Umfang des Faltrevolvers 65 angeordnet, die dazu führt, dass die radial aus der Tasche 64 herausstehenden Faltlappen zur Bildung der Flossennaht 37 gegen den Umfang des Faltrevolvers 65 gelegt werden. Auf diese Weise befinden sich die Faltlappen für die Flossennaht 37 in einer Ebene in Verlängerung der Innen-Bodenwand 36 seitlich neben der Zigarettengruppe 11 und können somit gesiegelt werden, ohne dass es zu einer Beeinträchtigung der Zigaretten kommt.

Eine Besonderheit besteht darin, dass zunächst die Flossennaht 37 im Bereich der Innen-Bodenwand 36 gesiegelt wird und erst danach die Faltlappen im Bereich der Innen-Seitenwände 35.

Der Faltrevolver 65 verfügt über eine Siegelleiste 77, die seitlich neben jeder Tasche 64 angeordnet ist, nämlich in einem Bereich, in dem sich nach dem Umlegen durch die Außenführung 76 die beiden Faltlappen des Innenzuschnitts 26 für die Flossennaht 37 befinden.

Die Siegelung der Flossennaht 37 erfolgt in drei Siegelstationen 78 während des taktweisen Transports auf dem Faltrevolver 65. In den Siegelstationen 78 ist jeweils ein Siegelorgan beispielsweise eine beheizbare Siegelbacke 79 am Umfang des Faltrevolvers 65 angeordnet. Die Siegelbacke 79 kann durch einen nicht gezeigten Antrieb in radialer Richtung zum Faltrevolver 65 bewegt werden, um die beiden Faltlappen des Innenzuschnitts 26 für die Flossennaht 37 zu siegeln. Dabei wird die Siegelbacke 79 durch eine Ausnehmung 80 in der Außenführung 76 bewegt. Nach dem (teilweisen) Siegeln der Flossennaht 37 wird die Siegelbacke 79 von der Siegelleiste 77 beabstandet, sodass der Faltrevolver 65 eine Station weiterbewegt werden kann.

Im vorliegenden Ausführungsbeispiel weist der Faltrevolver 65 zwölf Taschen 64 auf. Dabei sind drei Siegelstationen 78 vorgesehen, die sich in einer 11, 12 und 1 Uhr-Position befinden. In jeder Siegelstation 78 werden die Faltlappen des Innenzuschnitts 26 im Bereich der Flossennaht 37 gesiegelt, sodass insgesamt eine ausreichend dichte bzw. feste Verbindung gegeben ist. Je nach Umlaufzeiten auf dem Faltrevolver 65 kann auch eine größere oder eine geringere Anzahl von Siegelstationen 78 vorgesehen sein.

Währen der Herstellung der Flossennaht 37 sind die Faltlappen des Innenzuschnitts 26 für die Innen-Seitenwände 35 noch nicht gefaltet und stehen im Wesentlichen seitlich ab. Die Faltung dieser Seitenlappen erfolgt erst nach Ausschub aus dem Faltrevolver 65.

Im Anschluss an die drei Siegelstationen 78 befindet sich ein besonderes Organ zum Umlegen der Flossennaht 37 gegen die Innen-Bodenwand 36. Dieses ist im vorliegenden Fall in einer 10 Uhr-Position am Faltrevolver 65 angeordnet, nämlich vor einer Ausschubstation in einer 9 Uhr-Position.

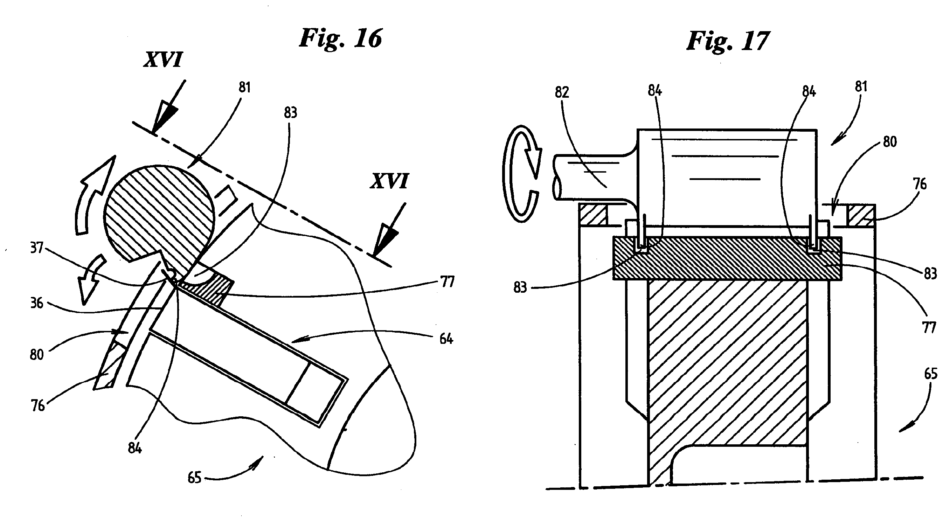

Die Anlegeeinrichtung 81 für die Flossennaht 37 ist im Detail in Fig. 16 und 17 gezeigt. Es handelt sich dabei um ein drehbares Organ das auf einer Achse 82 am Umfang des Faltrevolvers 65 gelagert ist. Die Anlegeeinrichtung 81 greift wie die Siegelbacke 79 durch eine Ausnehmung 80 in der Außenführung 76 und erfasst die Flossennaht 37 unterseitig. Hierzu sind zwei Ausnehmungen 83 in jeder Siegelleiste 77 ausgebildet. Zum Untergreifen der Flossennaht 37 weist die Anlegeeinrichtung 81 zwei voneinander beabstandete hakenartige Klauen 84 auf, die in Randbereichen der Flossennaht 37 wirksam werden. Entsprechend der Drehbewegung der Anlegeeinrichtung 81 sind die Ausnehmungen 83 im Querschnitt kreissektorförmig ausgebildet.

Nachdem die Flossennaht 37 durch die Anlegeeinrichtung 81 ausgerichtet ist, beispielsweise in die näherungsweise radial zum Faltrevolver 65 gerichtete Stellung gemäß Fig. 16, kann die Anlegeeinrichtung 81 mittels eines nicht gezeigten Getriebes entlang des Außenumfangs des Faltrevolvers 65 bewegt werden, um die Flossennaht 37 gegen die Innen-Bodenwand 36 zu legen in eine Stellung gemäß Fig. 6. Danach kehrt die Anlegeeinrichtung 8.1 in ihre Ausgangsstellung zurück für den nächsten Takt.

In der Ausschubstation des Faltrevolvers 65 werden die teilweise gefalteten und gesiegelten Innenpackungen 13 an einen horizontalen Förderer übergeben. Dies erfolgt durch den im Inneren des trommelartigen Faltrevolvers 65 angeordneten Schieber 66. Dieser schiebt die Innenpackungen 13 in den Bereich des anschließenden Förderers 85.

Auch der Förderer 85 ist taktweise angetrieben und verfügt über einen Fördertrum 86 mit Mitnehmern 87, 88. Die Mitnehmer 87, 88 sind so angeordnet, dass die teilweise gefalteten Innenpackungen 13 durch den Schieber 66 gegen einen vorneliegenden (kleineren) Mitnehmer 87 gefördert werden und die (größeren) Mitnehmer 88 rückseitig an der Innenpackung 13 zu liegen kommt. Auf diese Weise wird die umgelegte Flossennaht 37 in ihrer Position gesichert. Die Bewegung des Schiebers 66 und des Fördertrums 86 sind entsprechend überlagert.

Unterseitig ruhen die Innenpackungen auf einer Führungsplatte 91. Beim Ausschub der teilweise gefalteten Innenpackung 13 vom Faltrevolver 65 werden außerdem beidseitig über den Innenpackung 13 herausragende Randbereiche 89 der Innen-Bodenwand 36 und der Flossennaht 37 gegen die Kragen-Seitenwände 40 gelegt. Dies erfolgt durch ortsfeste Faltfinger 90, die im Einlaufbereich des Förderers 85 angeordnet sind wie die Faltfinger 74 auf dem Faltrevolver 65.

Nach Übergabe der teilweise gefalteten Innenpackung 13 befindet sich diese in einer Konfiguration gemäß Fig. 7 auf dem Förderer 85.

Nachfolgend werden während des taktweisen Vortriebs auf dem horizontal ausgerichteten Förderer 85 die seitlich über die Zigarettengruppe 11 herausstehenden Seitenlappen der Innen-Vorderwand 32 und der Innen-Rückwand 34 gegen die Kragen-Seitenwände 40 gefaltet, sodass eine kuvertartige Faltung in diesem Bereich entsteht. Dies erfolgt durch nicht gezeigte Faltweichen am Förderer 85. Auf diese Weise überdecken die kuvertartig gefalteten Faltlappen die umgelegten Randbereiche 89 der Flossennaht 37. Gleiches gilt für die umgefalteten Randbereiche 75.

Im Anschluss an den horizontal gerichteten Förderer 85 werden die gefalteten und teilweise gesiegelten Dichtblöcke 13 an einen vertikal gerichteten Förderer 92 übergeben. Im Bereich des Förderers 92 werden bestimmte Bereiche der Dichtblöcke 25 vorgesiegelt. Es handelt sich dabei um Randbereiche der Kragen-Seitenwände 40 im Überlappungsbereich der kuvertartig gefalteten Seitenlappen mit den Randbereichen 75, 89. Insbesondere werden hier Bereich gesiegelt, die später bei geöffnetem Deckel der Packung 10 zu sehen sind. Hierzu dienen Siegeleinrichtungen 93, die entlang des Förderers 92 in den zu siegelnden Bereichen angeordnet sind.

Im vorliegenden Fall sind vier Siegeleinrichtungen 93 für jeden zu siegelnden Randbereich vorgesehen, also jeweils zwei Siegeleinrichtungen 93 für jede Kragen-Seitenwand 40. Die Siegeleinrichtungen 93 sind auf beiden Seite des Dichtblocks 25 mit Abstand zueinander angeordnet. Dazwischen verlaufen Fördertrume 95, die die Dichtblöcke 25 im Bereich der Kragen-Seitenwände 40 halten. Die Fördertrume 95 des Förderers 92 sind als umlaufende Endlosförderer ausgebildet und weisen Mitnehmer 94 auf zum Halten der Dichtblöcke 25.

Auch der Förderer 92 ist taktweise angetrieben. Während der Stillstandsphase des Förderers 92 findet entsprechend die Vorsiegelung statt.

Die Endsiegelung der Dichtblöcke 25 findet auf einem daran anschließenden horizontalen Förderer 96 statt. Es handelt sich dabei wiederum um einen Endlosförderer mit einem Fördertrum 97 auf dem die Dichtblöcke 25 im Abstand zueinander aufliegen. Weiterhin sind Mitnehmer 98 vorgesehen, die die Dichtblöcke 25 rückseitig erfassen. Im Bereich des Förderers 96 sind weitere Siegeleinrichtungen 99 vorgesehen, die entlang des Förderwegs der Dichtblöcke 25 angeordnet sind, nämlich wiederum beiderseits des Förderwegs im Bereich der Kragen-Seitenwände 40. Die Siegeleinrichtungen 99 sind so ausgebildet, dass sie die Faltlappen im Bereich der Kragen-Seitenwände 40 vollflächig siegeln können. Es sind zwei Siegeleinrichtungen 99 in aufeinanderfolgenden Stationen vorgesehen, die die Dichtblöcke 25 während des taktweisen Vorschubs auf dem Förderer 96 passieren. Nach Passieren der zweiten Siegeleinrichtung 99 ist der Dichtblock 25 komplett gesiegelt.

Im Bereich der zweiten Siegeleinrichtung 99 können Coupons 100 oder andere Druckträger auf die Innen-Vorderwände 32 der Dichtblöcke 25 aufgelegt werden. Hierzu geeignete Couponaufleger und Magazine zum Bereithalten der Coupons 100 sind aus dem Stand der Technik bekannt.

Weiterhin vorgesehen ist eine Einheit zum Vereinzeln, Zuführen und Auflegen vom Kragen 16 zu den Dichtblöcken 25. Fig. 9 zeigt hierzu die Zuführung einer fortlaufenden Materialbahn 101 sowie eine daran anschließende Schneideinrichtung 102 mit Messerwalze 103 und Gegenwalze 104 zum Abtrennen der Kragen 16 aus der Materialbahn 101. Die vereinzelten Kragen 16 werden nachfolgend auf Abstand zueinander gebracht und dann an einen Querförderer 105 übergeben, der die Kragen 16 in Richtung des Förderers 96 transportiert bis oberhalb der Dichtblöcke 25. Dort werden sie von einem Krageneinschieber 106 auf die Dichtblöcke 25 aufgelegt. Die Vorrichtung kann ich diesem Bereich gemäß EP 0 496 261 B1 oder EP 0 667 232 B1 aus dem Hause der Anmelderin ausgebildet sein.

Im Anschluss an die Zuführung der Kragen 16 werden die Dichtblöcke 25 an einen Faltrevolver 107 übergeben, in dem vorgefaltete Zuschnitte für die Außenpackung 12 bereitgehalten werden. Die Packung 10 wird dann auf dem Faltrevolver 107 in bekannter Weise komplettiert.

Es versteht sich, dass die Zuführung von Coupons 11 und Kragen 16 optional ist und nicht zwingend vorhanden sein muss.

## Patentansprüche

1. Packung für stückiges Verpackungsgut, insbesondere für Zigaretten, bestehend aus einer Außenpackung (12), vorzugsweise in der Ausführung als Klappschachtel, und einer Innenpackung (13) als Dichtblock (25) mit einem den Packungsinhalt, insbesondere eine Zigarettengruppe (11), umgebenden Innenzuschnitt (26) aus vorzugsweise aroma-und feuchtigkeitsdichter, thermisch siegelbarer Folie, die im Bereich einer Innen-Stirnwand (33) eine mehrfach benutzbare Öffnungshilfe und im Bereich von Innen-Seitenwänden (35) sowie einer Innen-Bodenwand (36) durch thermisches Siegeln miteinander verbundene Faltlappen aufweist, wobei mindestens die Faltlappen im Bereich einer Innen-Bodenwand (36) des Innenzuschnitts (26) als Flossenfaltung ausgebildet und durch thermisches Siegeln außerhalb des Bereichs der Zigarettengruppe (11) zu einer Flossennaht (37) miteinander verbunden sind, **dadurch gekennzeichnet, dass** die Flossennaht (37) in Verlängerung der Ebene der Innen-Bodenwand (36) ausgebildet ist und gegen die Innen-Bodenwand (36) umgefaltet ist.

2. Packung nach Anspruch 1, **dadurch gekennzeichnet, dass** Seitenlappen des Innenzuschnitts (26) im Bereich der Innen-Seitenwänden (35) unter Bildung einer wechselseitigen Überdeckung in der Ebene der Innen-Seitenwände (35) gefaltet und durch thermisches Siegeln miteinander verbunden sind, wobei innerhalb des Dichtblocks (25) mindestens im Bereich der Seitenlappen Abdeckungen aus wärme- und druckbelastbarem Material, vorzugsweise aus Karton, angeordnet sind, insbesondere in der Ausführung eines Innenkragens (38) mit Kragen-Vorderwand (39) und Kragen-Seitenwänden (40), derart, dass der Innen-Bodenwand (36) zugekehrte Enden der Zigaretten unmittelbar an der Innen-Bodenwand (36) mit Flossennaht (37) anliegen.

3. Packung nach Anspruch 2, **dadurch gekennzeichnet, dass** der Innenkragen (38) durch im Wesentlichen abfallfreies Abtrennen aus einer fortlaufenden Materialbahn (54) hergestellt ist und eine Ausnehmung (42) zur Entnahme des Packungsinhalts und einen der Ausnehmung (42) entsprechenden Fortsatz (43) aufweist, der gegen die Kragen-Vorderwand (38) gefaltet wird, so dass im Bereich der Innen-Bodenwand (36) des Dichtblocks (25) kein Innenkragen (38) gebildet ist.

4. Verfahren zum Herstellen von Packungen (10) für Zigaretten, insbesondere nach Anspruch 1, mit einer Außenpackung (12), vorzugsweise in der Ausführung als Klappschachtel, und mit einer Innenpackung (13) als Dichtblock (25) mit einem den Packungsinhalt, insbesondere eine Zigarettengruppe (11), umgebenden Innenzuschnitt (26) aus vorzugsweise aroma- und feuchtigkeitsdichter, thermisch siegelbarer Folie, die im Bereich einer Innen-Stirnwand (33) eine mehrfach benutzbare Öffnungshilfe und im Bereich von Innen-Seitenwänden (35) sowie einer Innen-Bodenwand (36) durch thermisches Siegeln miteinander verbundene Faltlappen aufweist, **gekennzeichnet durch folgende Merkmale:**
a) der Packungsinhalt wird durch den bereitgehaltenen Innenzuschnitt (26) in die Tasche eines Faltrevolvers (65) gefördert unter teilweiser Einhüllung des Packungsinhalts in den Innenzuschnitt (26),
b) Faltlappen im Bereich einer Innen-Bodenwand (36) des Innenzuschnitts (26) werden in Verlängerung der Ebene der Innen-Bodenwand (36) auf dem Faltrevolver (65) durch thermisches Siegeln zu einer Flossennaht (37) miteinander verbunden, insbesondere in mehreren am Umfang des Faltrevolvers (65) angeordneten und aufeinander folgenden Siegelstationen (78) während einer Stillstandsphase des taktweise angetriebenen Faltrevolvers (65),
c) die gebildete Flossennaht (37) wird gegen die Innen-Bodenwand (36) umgefaltet,
d) nach dem Siegeln der Flossennaht (37) im Bereich der Innen-Bodenwand (36) und dem Umfalten der Flossennaht (37) gegen die Innen-Bodenwand (36) werden Randbereiche (89) der Flossennaht (37) beidseitig des Packungsinhalts gegen die Innen-Seitenwände (35) gefaltet und die Faltlappen des Innenzuschnitts (26) im Bereich der Innen-Seitenwände (35) unter Überdeckung der umgefalteten Randbereiche (89) der Flossennaht (37) übereinander gelegt und miteinander versiegelt.

5. Verfahren nach Anspruch 4, **dadurch gekennzeichnet, dass** die gebildete Flossennaht (37) durch eine am Umfang des Faltrevolvers (65) angeordnete Anlegeeinrichtung (81) gegen die Innen-Bodenwand (36) umgefaltet wird, insbesondere während einer Stillstandsphase des taktweise angetriebenen Faltrevolvers (65), vorzugsweise derart, dass die Flossennaht (37) aus einer Ebene in Verlängerung der Innen-Bodenwand (36) gegen die Innen-Bodenwand (36) gelegt wird.

6. Verfahren nach Anspruch 4, **dadurch gekennzeichnet, dass** zunächst die Randbereiche (89) mit mehrfach überlappenden Faltlappen vorgesiegelt werden und danach die Faltlappen im Bereich der Innen-Seitenwände (35) im Wesentlichen vollflächig endgesiegelt werden, und wobei vorzugsweise der Packungsinhalt mit Innenzuschnitt (26) und Flossennaht (37) im Bereich der Innen-Bodenwand (36) aus dem Faltrevolver (65) ausgeschoben wird und im Bereich eines vorzugsweise vertikalen Förderers (92) vorgesiegelt und im Bereich eines daran anschließenden vorzugsweise horizontalen Förderers (96) endgesiegelt wird.

7. Verfahren nach Anspruch 4 oder einem der weiteren vorhergehenden Ansprüche, **dadurch gekennzeichnet, dass** dem Packungsinhalt vor der Zuführung des Innenzuschnitts (26) ein Innenkragen (38) zugeführt wird, der in einem Revolver (52) C-förmig positioniert wird und in den dann die Zigarettengruppe (11) als Packungsinhalt eingeschoben wird und dass der Packungsinhalt mit Innenkragen (38) aus dem Revolver (52) ausgefördert und durch den bereitgehaltenen Innenzuschnitt (26) in den Faltrevolver (65) eingefördert wird.

8. Verfahren nach Anspruch 4 oder einem der weiteren vorhergehenden Ansprüche, **dadurch gekennzeichnet, dass** im Anschluss an das Siegeln der Faltlappen des Innenzuschnitts (26) der Dichtblock (25) entlang einer vorzugsweise horizontalen Förderstrecke gefördert wird zum fakultativen Auflegen eines Coupons (100) und/oder eines Kragens (16) und dass danach der Dichtblock (25) in eine Tasche eines Faltrevolvers (107) mit einem Zuschnitt für die Außenpackung (12) eingeschoben wird zum Falten der Packung (10).

9. Vorrichtung zum Herstellen von Packungen (10) für Zigaretten, insbesondere nach Anspruch 1, mit einer Außenpackung (12), vorzugsweise in der Ausführung als Klappschachtel, und einer Innenpackung (13) als Dichtblock (25) mit einer den Packungsinhalt, insbesondere eine Zigarettengruppe (11), umgebenden Innenzuschnitt (26) aus vorzugsweise aroma- und feuchtigkeitsdichter, thermisch siegelbarer Folie, die im Bereich einer Innen-Stirnwand (33) eine mehrfach benutzbare Öffnungshilfe und im Bereich von Innen-Seitenwänden (35) sowie einer Innen-Bodenwand (36) durch thermisches Siegeln miteinander verbundene Faltlappen aufweist, wobei die Vorrichtung einen Faltrevolver (65) mit Taschen (64) zur Aufnahme jeweils eines Packungsinhalts mit darumgelegtem Innenzuschnitt (26) aufweist und vorzugsweise mehrere am Umfang des Faltrevolvers angeordnete Siegelstationen (78) zum Siegeln von Faltlappen im Bereich einer Innen-Bodenwand (36) des Innenzuschnitts (26) in Art einer Flossennaht (37) während einer Stillstandsphase des taktweise angetriebenen Faltrevolvers (65), **dadurch gekennzeichnet, dass** die oder jede Siegelstation (78) eine dem Faltrevolver (65) zugeordnete Siegelleiste (77) sowie eine am Umfang des Faltrevolvers (65) und an eine Längskante der Innen-Bodenwand (36) angrenzende, ortsfest angeordnete Siegelbacke (79) aufweist, wobei die Siegelbacke (79) während der Drehphase des Faltrevolvers (65) zur Siegelleiste (77) beabstandbar ist und zum Siegeln der Flossennaht (37) zur Anlage an der Siegelleiste (77) bringbar ist, und dass wenigstens im Bereich der Siegelstation eine Außenführung (76) für die Faltlappen im Bereich der Innen-Bodenwand (36) vorgesehen ist und dass die Siegelbacke (79) durch eine Ausnehmung (80) der Außenführung (76) zur Anlage an der Siegelleiste (77) bringbar ist.

10. Vorrichtung nach Anspruch 9, **dadurch gekennzeichnet, dass** am Umfang des Faltrevolvers (65) im Anschluss an die Siegelstation (78) eine Anlegeeinrichtung (81) angeordnet ist, zum Anlegen der Flossennaht (37) gegen die Innen-Bodenwand (36).

11. Vorrichtung nach Anspruch 9, **dadurch gekennzeichnet, dass** im Anschluss an den Faltrevolver (65) ein Förderer (85) für den Packungsinhalt mit Innenzuschnitt (26) angeordnet ist, der ortsfeste Faltweichen zum Falten von Faltlappen im Bereich der Innen-Seitenwände (35) aufweist und dass im weiteren Förderweg des Packungsinhalts mit Innenzuschnitt (26), insbesondere im Bereich eines vorzugsweise aufrechten Förderers (92), Siegeleinrichtungen (92) angeordnet sind zum Vorsiegeln von Randbereichen der Innen-Seitenwände (35) mit mehrfach überlappenden Faltlappen sowie nachfolgend, insbesondere im Bereich eines vorzugsweise horizontalen Förderers (96), weitere Siegeleinrichtung (99) zum im Wesentlichen vollflächigen Endsiegeln der Innen-Seitenwände (35).

12. Vorrichtung nach Anspruch 11, **dadurch gekennzeichnet, dass** im weiteren Förderweg der Dichtpackung (25) Einrichtungen zum Auflegen von Druckträgern (100) und/oder Kragen (16) angeordnet sind.

13. Vorrichtung nach Anspruch 11, **dadurch gekennzeichnet, dass** die Siegelbacke (79) während der Drehphase des Faltrevolvers (65) zur Siegelleiste (77) beabstandbar ist und zum Siegeln der Flossennaht (37) zur Anlage an der Siegelleiste (77) bringbar ist, nämlich durch Bewegung in radialer Richtung in Bezug auf den Umfang des Faltrevolvers (65), und wobei vorzugsweise die Siegelleiste (77) Ausnehmungen (83) aufweist zum Untergreifen und Umlegen der Flossennaht (37) durch die Anlegeeinrichtung (81).

14. Vorrichtung nach Anspruch 9, **dadurch gekennzeichnet, dass** die Siegelleiste (77) seitlich auf Höhe der Innen-Bodenwand (36) neben einer Tasche (64) des Faltrevolvers (65) angeordnet ist und dass die Faltlappen der Innen-Bodenwand (36) seitlich auf die Siegelleiste (77) umgelegt sind zum Siegeln der Flossennaht (37).

## Claims

1. A pack for piece-form articles, in particular for cigarettes, comprising an outer pack (12), preferably configured as a hinge-lid box, and an inner pack (13) as a sealed block (25) with an inner blank (26) which encloses the pack contents, in particular a cigarette group (11), and is made of preferably aroma-tight and moisture-tight, thermally sealable sheet material, the inner pack having, in the region of an inner end wall (33), an opening aid which can be used a number of times and, in the region of inner side walls (35) and an inner base wall (36), folding flaps which are connected to one another by thermal sealing, wherein at least the folding flaps in the region of an inner base wall (36) of the inner blank (26) are designed as a fin fold and are connected to one another by thermal sealing outside the region of the cigarette group (11) to form a fin seam (37), **characterized in that** the fin seam (37) is formed in an extension of the plane of the inner base wall (36) and is folded over against the inner base wall (36).

2. The pack as claimed in claim 1, **characterized in that** side flaps of the inner blank (26) in the region of the inner side walls (35) are folded so that they cover over one another in the plane of the inner side walls (35), and are connected to one another by thermal sealing, wherein arranged within the sealed block (25), at least in the region of the side flaps, are coverings made of material which can be subjected to heat and pressure, are preferably made of cardboard, in particular configured as an inner collar (38) with a collar front wall (39) and collar side walls (40) such that those ends of the cigarettes which are directed toward the inner base wall (36) butt directly against the inner base wall (36) with fin seam (37).

3. The pack as claimed in claim 2, **characterized in that** the inner collar (38) is produced by being severed in an essentially waste-free manner from a continuous material web (54), and has a cutout (42), for the removal of the pack contents, and an extension (43), which corresponds to the cutout (42) and is folded against the collar front wall (38) so that no inner collar (38) is formed in the region of the inner base wall (36) of the sealed block (25).

4. A method of producing packs (10) for cigarettes, in particular as claimed in claim 1, having an outer pack (12) preferably configured as a hinge-lid box, and having an inner pack (13) as a sealed block (25) with an inner blank (26) which encloses the pack contents, in particular a cigarette group (11), and is made of preferably aroma-tight and moisture-tight, thermally sealable sheet material, the inner pack having, in the region of an inner end wall (33), an opening aid which can be used a number of times and, in the region of inner side walls (35) and an inner base wall (36), folding flaps which are connected to one another by thermal sealing, **characterized by the following features:**
a) the pack contents are conveyed, by the supplied inner blank (26), into the pocket of a folding turret (65), with the pack contents being wrapped partially in the inner blank (26),
b) folding flaps in the region of an inner base wall (36) of the inner blank (26) are connected to one another by thermal sealing on the folding turret (65) and in an extension of the plane of the inner base wall (36) to form a fin seam (37), in particular in a plurality of successive sealing stations (78), which are arranged on the circumference of the folding turret (65), while the cyclically driven folding turret (65) is at a standstill,
c) the formed fin seam (37) is folded over against the inner base wall (36),
d) following the operations of sealing the fin seam (37) in the region of the inner base wall (36) and of folding over the fin seam (37) against the inner base wall (36), peripheral regions (89) of the fin seam (37) on either side of the pack contents are folded against the inner side walls (35), and the folding flaps of the inner blank (26) in the region of the inner side walls (35) are positioned one above the other, covering over the folded-over peripheral regions (89) of the fin seam (37) in the process, and are sealed to one another

5. The method as claimed in claim 4, **characterized in that** the fin seam (37) formed is folded over against the inner base wall (36), in particular while the cyclically driven folding turret (65) is at a standstill, by a positioning device (81), which is arranged on the circumference of the folding turret (65), preferably such that the fin seam (37) is positioned against the inner base wall (36) from a plane in extension of the inner base wall (36).

6. The method as claimed in claim 4, **characterized in that**, in the first instance the peripheral regions (89), with multiple-overlap folding flaps, are pre-sealed and then the folding flaps in the region of the inner side walls (35) are definitively sealed essentially over the entire surface area, and wherein preferably the pack contents with inner blank (26) and fin seam (37) in the region of the inner base wall (36) are pushed out of the folding turret (65) and pre-sealed in the region of a preferably vertical conveyor (92) and definitively sealed in the region of a following, preferably horizontal conveyor (96).

7. The method as claimed in claim 4 or one of the further preceding claims, **characterized in that** the pack contents, prior to the inner blank (26) being fed, are fed an inner collar (38), which is positioned in a C-shaped manner in a turret (52) and into which the cigarette group (11), as pack contents, is then pushed, and **in that** the pack contents with inner collar (38) are conveyed out of the turret (52) and conveyed into the folding turret (65) by the supplied inner blank (26).

8. The method as claimed in claim 4 or one of the further preceding claims, **characterized in that,** following the operation of sealing the folding flaps of the inner blank (26), the sealed block (25) is conveyed along a preferably horizontal conveying path in order for a coupon (100) and/or a collar (16) to be optionally placed in position, and **in that** the sealed block (25) is then pushed into a pocket of a folding turret (107) with a blank for the outer pack (12), in order for the pack (10) to be folded.

9. An apparatus for producing packs (10) for cigarettes, in particular as claimed in claim 1, having an outer pack (12) preferably configured as a hinge-lid box, and an inner pack (13) as a sealed block (25) with an inner blank (26) which encloses the pack contents, in particular a cigarette group (11), and is made of preferably aroma-tight and moisture-tight, thermally sealable sheet material, the inner pack having, in the region of an inner end wall (33), an opening aid which can be used a number of times and, in the region of inner side walls (35) and an inner base wall (36), folding flaps which are connected to one another by thermal sealing, wherein the apparatus has a folding turret (65) with pockets (64) for receiving pack contents in each case with an inner blank (26) positioned around the same, and preferably a plurality of sealing stations (78), which are arranged on the circumference of the folding turret and are intended for sealing folding flaps in the region of an inner base wall (36) for the inner blank (26) in the manner of a fin seam (37) while the cyclically driven folding turret (65) is at a standstill, **characterized in that** the or each sealing station (78) has a sealing bar (77), which is assigned to the folding turret (65), and a sealing jaw (79), which is arranged at a fixed location on the circumference of the folding turret (65) and adjacent to a longitudinal edge of the inner base wall (36), wherein the sealing jaw (79) can be spaced apart from the sealing bar (77) during the rotary phase of the folding turret (65) and can be brought into abutment against the sealing bar (77) for the purpose of sealing the fin seam (37), and **in that** an outer guide (76) for the folding flaps in the region of the inner base wall (36) is provided at least in the region of the sealing station, and **in that** the sealing jaw (79) can be brought into abutment against the sealing bar (77) through a cutout (80) of the outer guide (76).

10. The apparatus as claimed in claim 9, **characterized in that** a positioning device (81), for positioning the fin seam (37) against the inner base wall (36), is arranged on the circumference of the folding turret (65), following the sealing station (78).

11. The apparatus as claimed in claim 9, **characterized in that** the folding turret (65) is followed by a conveyor (85) for the pack contents with inner blank (26), this conveyor having fixed-location folding diverters for folding the folding flaps in the region of the inner side walls (35), and **in that**, arranged further along the conveying route of the pack contents with inner blank (26), in particular in the region of a preferably upright conveyor (92), are sealing devices (92), for pre-sealing peripheral regions of the inner side walls (35), with multiple-overlap folding flaps and, following these, in particular in the region of a preferably horizontal conveyor (96), a further sealing device (99), for definitively sealing the inner side walls (35) essentially over the entire surface area.

12. The apparatus as claimed in claim 11, **characterized in that** devices for placing printing carriers (100) and/or collars (16) in position are arranged further along the conveying route of the sealed pack (25).

13. The apparatus as claimed in claim 11, **characterized in that,** the sealing jaw (79) can be spaced apart from the sealing bar (77) during the rotary phase of the folding turret (65) and can be brought into abutment against the sealing bar (77) for the purpose of sealing the fin seam (37), this displacement of the sealing jaw being achieved namely by movement in the radial direction in relation to the circumference of the folding turret (65), and wherein preferably the sealing bar (77) has cutouts (83) in order for the positioning device (81) to engage beneath, and fold over, the fin seam (37).

14. The apparatus as claimed in claim 9, **characterized in that** the sealing bar (77) is arranged alongside a pocket (64) of the folding turret (65), laterally level with the inner base wall (36), and **in that** the folding flaps of the inner base wall (36) are folded over laterally onto the sealing bar (77) in order for the fin seam (37) to be sealed.

## Revendications

1. Emballage pour des articles en pièces à emballer, en particulier pour des cigarettes, se composant d'un emballage extérieur (12), de préférence sous la forme d'une boîte pliante, et d'un emballage intérieur (13) sous la forme d'un bloc étanche (25) avec une pièce découpée intérieure (26) en une feuille soudable à chaud et de préférence étanche aux arômes et à l'humidité entourant le contenu du paquet, en particulier un groupe de cigarettes (11), qui présente dans la région d'une paroi avant intérieure (33) un moyen d'ouverture utilisable plusieurs fois et dans la région de parois latérales intérieures (35) ainsi que d'une paroi de fond intérieure (36) des rabats assemblés l'un à l'autre par soudage à chaud, dans lequel au moins les rabats sont réalisés en forme de pli fin dans la région d'une paroi de fond intérieure (36) de la pièce découpée intérieure (26) et sont assemblés l'un à l'autre en une soudure à ailette (37) par soudage à chaud à l'extérieur de la région du groupe de cigarettes (11), **caractérisé en ce que** la soudure à ailette (37) est formée en prolongement du plan de la paroi de fond intérieure (36) et est repliée contre la paroi de fond intérieure (36).

2. Emballage selon la revendication 1, **caractérisé en ce que** les rabats latéraux de la pièce découpée intérieure (26) sont pliés dans la région des parois latérales intérieures (35) avec formation d'un recouvrement mutuel dans le plan des parois latérales intérieures (35) et sont assemblés l'un à l'autre par soudage à chaud, dans lequel des recouvrements en un matériau résistant à la chaleur et à la pression, de préférence en carton, sont disposés à l'intérieur du bloc étanche (25) au moins dans la région des rabats latéraux, en particulier sous la forme d'un étui intérieur (38) avec une paroi avant d'étui (39) et des parois latérales d'étui (40), de telle manière que des extrémités des cigarettes tournées vers la paroi de fond intérieure (36) reposent directement sur la paroi de fond intérieure (36) avec une soudure à ailette (37) .

3. Emballage selon la revendication 2, **caractérisé en ce que** l'étui intérieur (38) est produit par découpage essentiellement sans déchets dans une bande de matériau en mouvement (54) et présente une découpe (42) pour prélever le contenu du paquet et un prolongement (43) correspondant à la découpe (42), qui est plié contre la paroi avant d'étui (38), de telle manière qu'un étui intérieur (38) ne soit pas formé dans la région de la paroi de fond intérieure (36) du bloc étanche (25).

4. Procédé de fabrication d'emballages (10) pour des cigarettes, en particulier selon la revendication 1, avec un emballage extérieur (12), de préférence sous la forme d'une boîte pliante, et avec un emballage intérieur (13) sous la forme d'un bloc étanche (25) avec une pièce découpée intérieure (26) en une feuille soudable à chaud et de préférence étanche aux arômes et à l'humidité entourant le contenu du paquet, en particulier un groupe de cigarettes (11), qui présente dans la région d'une paroi avant intérieure (33) un moyen d'ouverture utilisable plusieurs fois et dans la région de parois latérales intérieures (35) ainsi que d'une paroi de fond intérieure (36) des rabats assemblés l'un à l'autre par soudage à chaud, **caractérisé par** les caractéristiques suivantes:
a) le contenu du paquet est transporté par la pièce découpée intérieure préparée (26) dans la poche d'une tourelle de pliage (65) avec emballage partiel du contenu du paquet dans la pièce découpée intérieure (26),
b) des rabats dans la région d'une paroi de fond intérieure (36) de la pièce découpée intérieure (26) sont assemblés l'un à l'autre par soudage à chaud en une soudure à ailette (37) sur la tourelle de pliage (65) en prolongement du plan de la paroi de fond intérieure (36), en particulier dans plusieurs stations de soudage (78) disposées et se succédant à la périphérie de la tourelle de pliage (65) pendant une phase d'arrêt de la tourelle de pliage (65) entraînée pas à pas,
c) la soudure à ailette formée (37) est repliée contre la paroi de fond intérieure (36), et
d) après le soudage de la soudure à ailette (37) dans la région de la paroi de fond intérieure (36) et le pliage de la soudure à ailette (37) contre la paroi de fond intérieure (36), des régions de bord (89) de la soudure à ailette (37) sont pliées de part et d'autre du contenu du paquet contre les parois latérales intérieures (35) et les rabats de la pièce découpée intérieure (26) sont superposés et soudés l'un à l'autre dans la région des parois latérales intérieures (35) avec recouvrement des régions de bord repliées (89) de la soudure à ailette (37).

5. Procédé selon la revendication 4, **caractérisé en ce que** l'on replie la soudure à ailette formée (37) contre la paroi de fond intérieure (36) au moyen d'un dispositif d'application (81) disposé à la périphérie de la tourelle de pliage (65), en particulier pendant une phase d'arrêt de la tourelle de pliage (65) entraînée pas à pas, de préférence de telle manière que la soudure à ailette (37) soit posée contre la paroi de fond intérieure (36) à partir d'un plan en prolongement de la paroi de fond intérieure (36).

6. Procédé selon la revendication 4, **caractérisé en ce que** l'on soude d'abord provisoirement les régions de bord (89) avec des rabats se recouvrant plusieurs fois et on soude ensuite finalement les rabats dans la région des parois latérales intérieures (35) essentiellement sur toute la surface, et dans lequel on pousse de préférence le contenu du paquet avec la pièce découpée intérieure (26) et la soudure à ailette (37) dans la région de la paroi de fond intérieure (36) hors de la tourelle de pliage (65) et on le soude provisoirement dans la région d'un convoyeur de préférence vertical (92) et finalement dans la région d'un convoyeur (96) de préférence horizontal qui s'y raccorde.

7. Procédé selon la revendication 4 ou l'une quelconque des autres revendications précédentes, **caractérisé en ce que** l'on ajoute au contenu du paquet, avant la fourniture de la pièce découpée intérieure (26), un étui intérieur (38), qui est positionné en forme de C dans une tourelle (52) et dans lequel le groupe de cigarettes (11) est ensuite glissé en tant que contenu de paquet et **en ce que** l'on retire le contenu de paquet avec l'étui intérieur (38) hors de la tourelle (52) et on l'introduit au moyen de la pièce découpée intérieure préparée (26) dans la tourelle de pliage (65).

8. Procédé selon la revendication 4 ou l'une quelconque des autres revendications précédentes, **caractérisé en ce qu'**à la suite du soudage des rabats de la pièce découpée intérieure (26), on transporte le bloc étanche (25) le long d'une section de transport de préférence horizontale pour la pose facultative d'un coupon (100) et/ou d'un étui (16) et **en ce que** l'on glisse ensuite le bloc étanche (25) dans une poche d'une tourelle de pliage (107) avec une pièce découpée pour l'emballage extérieur (12) pour le pliage de l'emballage (10).

9. Dispositif de fabrication d'emballages (10) pour des cigarettes, en particulier selon la revendication 1, avec un emballage extérieur (12), de préférence sous la forme d'une boîte pliante, et un emballage intérieur (13) sous la forme d'un bloc étanche (25) avec une pièce découpée intérieure (26) en une feuille soudable à chaud et de préférence étanche aux arômes et à l'humidité entourant le contenu du paquet, en particulier un groupe de cigarettes (11), qui présente dans la région d'une paroi avant intérieure (33) un moyen d'ouverture utilisable plusieurs fois et dans la région de parois latérales intérieures (35) ainsi que d'une paroi de fond intérieure (36) des rabats assemblés l'un à l'autre par soudage à chaud, le dispositif présentant une tourelle de pliage (65) avec des poches (64) destinées à recevoir à chaque fois un contenu de paquet enveloppé d'une pièce découpée intérieure (26) et de préférence plusieurs stations de soudage (78) disposées à la périphérie de la tourelle de pliage pour le soudage de rabats dans la région d'une paroi de fond intérieure (36) de la pièce découpée intérieure (26) à la manière d'une soudure à ailette (37) pendant une phase d'arrêt de la tourelle de pliage (65) entraînée pas à pas, **caractérisé en ce que** la ou chaque station de soudage (78) présente une barre de soudage (77) associée à la tourelle de pliage (65) ainsi qu'une mâchoire de soudage (79) disposée de façon fixe à la périphérie de la tourelle de pliage (65) et adjacente à une arête longitudinale de la paroi de fond intérieure (36), dans lequel la mâchoire de soudage (79) peut être écartée de la barre de soudage (77) pendant la phase de rotation de la tourelle de pliage (65) et être appliquée sur la barre de soudage (77) pour le soudage de la soudure à ailette (37) et **en ce qu'**il est prévu au moins dans la région de la station de soudage un guidage extérieur (76) pour les rabats dans la région de la paroi de fond intérieure (36) et **en ce que** la mâchoire de soudage (79) peut être appliquée sur la barre de soudage (77) à travers une découpe (80) du guidage extérieur (76).

10. Dispositif selon la revendication 9, **caractérisé en ce qu'**un dispositif d'application (81) est disposé à la périphérie de la tourelle de pliage (65) à la suite de la station de soudage (78), pour l'application de la soudure à ailette (37) contre la paroi de fond intérieure (36).

11. Dispositif selon la revendication 9, **caractérisé en ce qu'**un convoyeur (85) pour le contenu de paquet avec une pièce découpée intérieure (26) est disposé à la suite de la tourelle de pliage (65), et présente des aiguilles de pliage fixes pour le pliage de rabats dans la région des parois latérales intérieures (35) et **en ce que** dans la suite du trajet du contenu de paquet avec la pièce découpée intérieure (26), en particulier dans la région d'un convoyeur de préférence vertical (92), sont disposés des dispositifs de soudage (92) pour le soudage provisoire de régions de bord des parois latérales intérieures (35) avec des rabats se recouvrant plusieurs fois ainsi qu'ensuite, en particulier dans la région d'un convoyeur de préférence horizontal (96), un autre dispositif de soudage (99) pour le soudage final essentiellement sur toute la surface des parois latérales intérieures (35).

12. Dispositif selon la revendication 11, **caractérisé en ce que** des dispositifs pour apposer des supports imprimés (100) et/ou des étuis (16) sont disposés dans la suite du trajet de l'emballage étanche (25).

13. Dispositif selon la revendication 11, **caractérisé en ce que** la mâchoire de soudage (79) peut être écartée de la barre de soudage (77) pendant une phase de rotation de la tourelle de pliage (65) et appliquée sur la barre de soudage (77) pour le soudage de la soudure à ailette (37), notamment par un mouvement en direction radiale par rapport à la périphérie de la tourelle de pliage (65), et dans lequel la barre de soudage (77) présente de préférence des découpes (83) destinées à saisir et à replier la soudure à ailette (37) par le dispositif d'application (81).

14. Dispositif selon la revendication 9, **caractérisé en ce que** la barre de soudage (77) est disposée latéralement à hauteur de la paroi de fond intérieure (36) à côté d'une poche (64) de la tourelle de pliage (65) et **en ce que** les rabats de la paroi de fond intérieure (36) sont repliés latéralement sur la barre de soudage (77) pour le soudage de la soudure à ailette (37) .
